# EUROPEAN PATENT SPECIFICATION

(11) **EP 3 246 587 B1**
(45) Date of publication and mention of the grant of the patent: **21.04.2021**
(21) Application number: 15877800.1
(22) Date of filing: 13.01.2015
(51) Int. Cl.: F16D 65/092, F16D 55/28, F16D 69/00, B66D 5/14, F16D 65/18, F16D 65/847

(54) **BRAKE DEVICE AND ELEVATOR SYSTEM**
BREMSVORRICHTUNG UND AUFZUGSSYSTEM
DISPOSITIF DE FREIN ET SYSTÈME D'ASCENSEUR

(43) Date of publication of application: 22.11.2017
(73) Proprietor: Hitachi, Ltd., Chiyoda-ku Tokyo 100-8280 (JP)
(72) Inventor: ABE, Takashi, Tokyo 100-8280 (JP); NAKAYAMA, Tetsuya, Tokyo 100-8280 (JP)
(74) Representative: MERH-IP Matias Erny Reichl Hoffmann Patentanwälte PartG mbB
(86) International application number: PCT/JP2015/050668
(87) International publication number: WO 2016/113845

(56) References cited:
- EP-A1- 1 717 474
- JP-A- H06 313 455
- JP-A- 2005 119 860
- JP-A- 2009 274 833
- JP-A- 2013 144 585
- JP-A- 2013 144 585
- JP-A- 2014 122 103
- JP-A- 2014 122 103
- JP-U- S60 182 537

## Description

### Technical Field

The present invention relates to a brake device and an elevator system thereof.

### Background Art

The background art in this technical field includes Japanese Patent Application Laid-Open No. 2012-225513 (Patent Literature 1). This publication describes a brake system which includes: a disk which rotates in conjunction with a rotating body of an apparatus; a plurality of pads each disposed opposite the disk; and a pressing mechanism which presses each pad against the surface of the disk, in which the plural pads are disposed opposite the disk in mutually different braking radius positions and in mutually different angular positions around the rotational center axis of the disk on different diameter lines of the disk.

### Patent Literatures

**Patent Literature 1: Japanese Patent Application Laid-Open No.** 2012-225513

In JP 2005 119860 A a machine comprises a rotor formed in a bowl shape with a braking surface formed on an inner peripheral surface. A braking device is arranged inside the bowl-shaped part of the housing having a shoe capable of freely advancing, retreating in relation to the braking surface of the rotor for braking the rotor by pressing the shoe to the breaking surface of the rotor.
In EP 1717474 A1 a brake device for braking rotation of a rotary member rotatably supported to a support portion is described.
In JP 2013 144585 A a disk brake device for an elevator winding machine includes a brake disk, at least one brake piece that is selectively pressed on a brake disk and a plunger that supports the brake piece and makes the brake piece move to the brake disk.

### Summary of Invention

### Technical Problem

In the brake system described in Patent Literature 1, the pads are structurally identical. Hence, when the pads are disposed on mutually different rotational circumferences of the disk, the structure of the calipers for holding the pads must be changed and thus the structure may be complicated, thereby making assembling work and adjusting work troublesome.

The object of the present invention is to reduce or disperse a frictional heat caused by pads of a brake device, and also to make the calipers for holding the pads structurally identical, to simplify the structure and to make assembling work and adjusting work easy.

### Solution to Problem

In order to solve the above problem, the present invention includes a brake device having a function to adjust a speed of a hoisting machine, or stop the hoisting machine as a constituent element of an elevator system, the brake device including: a rotating braked body having a rotary shaft interlocked with a rotation of the hoisting machine; a plurality of pads which are disposed on a surface of the rotating braked body in an attachable and detachable manner and have a function to give a braking force to the rotating braked body; and a plurality of calipers holding the pads, in which the plural calipers are structurally identical to each other, the pads have a pressing part to contact the surface of the rotating braked body and a recessed part not to contact the surface of the rotating braked body, and a position on the rotating braked body which contacts the pressing part of the pad in one of the calipers is different from a position on the rotating braked body which contacts the pressing part of the pad in another caliper.

### Advantageous Effects of Invention

According to the present invention, the frictional heat caused by the pads of the brake device can be reduced or dispersed, and also the calipers for holding the pads are made structurally identical so that assembling work and adjusting work can be easy. Problems, constituents and effects other than the abovementioned will be apparent from the following description of embodiments.

### Brief Description of Drawings

Figure 1 is a schematic view which shows an essential portion of a brake device according to the present invention as seen from a rotation axis direction.
Figure 2 is a schematic view of the essential portion of the brake device shown in Figure 1 as seen from a direction perpendicular to the rotation axis direction.
Figure 3 is a schematic view which shows a concave-convex structure of a surface of the pad 2A shown in Figure 2.
Figure 4 is a schematic view as seen from a direction perpendicular to the surface shown in Figure 3.
Figure 5 is a schematic view which shows the concave-convex structure of the surface of the pad 2B shown in Figure 2.
Figure 6 is a schematic view as seen from the direction perpendicular to the surface shown in Figure 5.
Figure 7 is a schematic view which shows the concave-convex structure of the pad 2A shown in Figure 2 according to another embodiment.
Figure 8 is a schematic view as seen from the direction perpendicular to the surface shown in Figure 7.
Figure 9 is a schematic view which shows the concave-convex structure of the surface of the pad 2B in Figure 2 according to another embodiment.
Figure 10 is a schematic view as seen from the direction perpendicular to the surface shown in Figure 9.
Figure 11 is a schematic block diagram which shows an elevator system according to an embodiment of the present invention.
Figure 12 is a side view which shows details of an elevator braking device 100 shown in Figure 11.
Figure 13 is a view taken in the direction of arrow A in Figure 12.
Figure 14 is an enlarged side view which shows a brake core CR including a brake shoe 51 shown in Figure 13.

### Description of Embodiments

The present invention relates to a brake device of an elevator system and more particularly to a brake device which puts a brake on a rotating braked body using a plurality of calipers.

The present invention is characterized by an arrangement and a shape of pads of the brake device of the elevator system.

Next, embodiments of the present invention will be described referring to drawings.

### First Embodiment

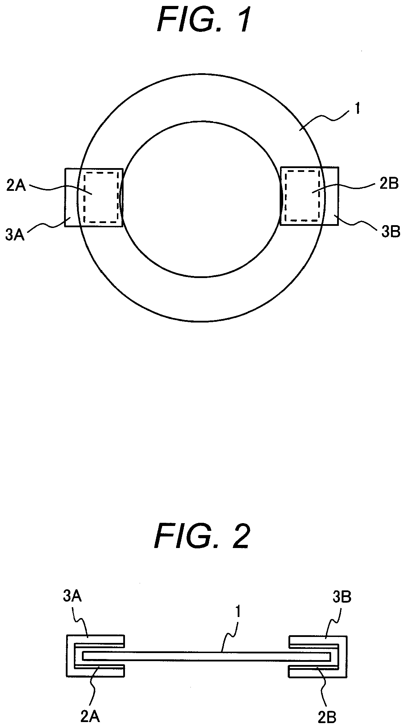

Figure 1 is a schematic view of an essential portion of a brake device as seen from a rotation axis direction. Figure 2 is a schematic view of the essential portion of the brake device shown in Figure 1 as seen from a direction perpendicular to the rotation axis direction.

Figure 1 shows a rotating braked body 1 such as a disk (discoidal) which is fixed to a rotary shaft of an apparatus such as an elevator hoisting machine. Calipers 3A and 3B are arranged in at least two places in the rotational direction of the rotating braked body 1.

The brake device has a pressing mechanism or the like (not shown) for pressing pads 2A and 2B against the surface of the rotating braked body 1.

As shown in Figures 1 and 2, the caliper 3A has the pad 2A to be pressed against the surface of the rotating braked body 1 to give a braking force. On the other hand, the caliper 3B has the pad 2B to be pressed against the surface of the rotating braked body 1 to give a braking force. Here, the caliper 3A and caliper 3B have the same structure and are formed into a C or U shape in a manner to sandwich the rotating braked body 1.

In Figure 1, the caliper 3B is located at a position 180 degrees away from the caliper 3A in the rotational direction of the rotating braked body 1. Generally, the two calipers 3A and 3B are arranged symmetrically with respect to the centerline of the surface of the rotating braked body 1.

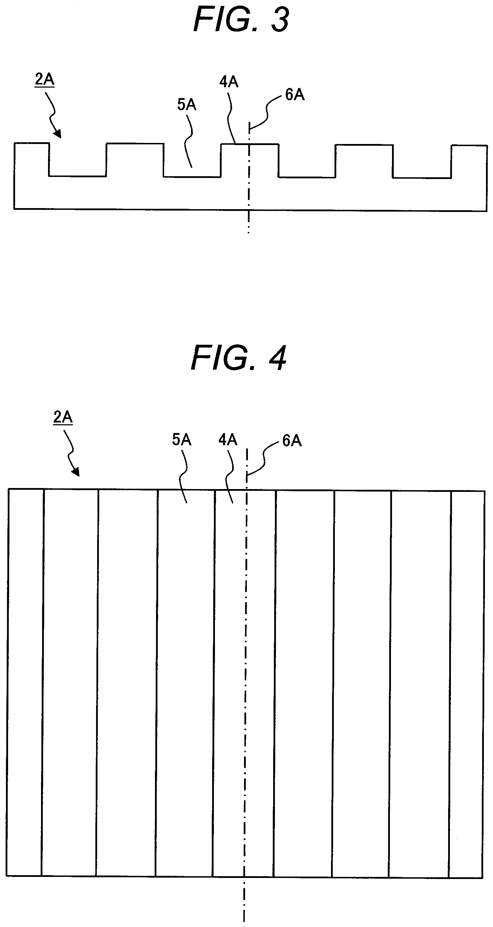

Figure 3 is a schematic view which shows a concave-convex structure of a surface of the pad 2A shown in Figure 2. Figure 4 is a schematic view as seen from a direction perpendicular to the surface shown in Figure 3.

A plurality of pressing parts 4A are formed on the surface of the pad 2A which contacts the planar section of the rotating braked body 1 shown in Figure 1. A plurality of recessed parts 5A which do not contact the planar section of the rotating braked body 1 are formed between pressing parts 4A. Here, the pad 2A is symmetric with respect to a centerline 6A of the width dimension of the pad 2A in the radial direction of the rotating braked body 1 shown in Figure 1. More specifically, five pressing parts 4A are formed and the widthwise center of one pressing part 4A among them is located on the centerline 6A. On the other hand, preferably each pressing part 4A has a prescribed length which extends almost parallel to a tangential direction of the planar section of the rotating braked body 1 shown in Figure 1. Generally, it is preferable that at least a portion of the recessed part 5A be arranged in the tangential direction of the rotating braked body 1.

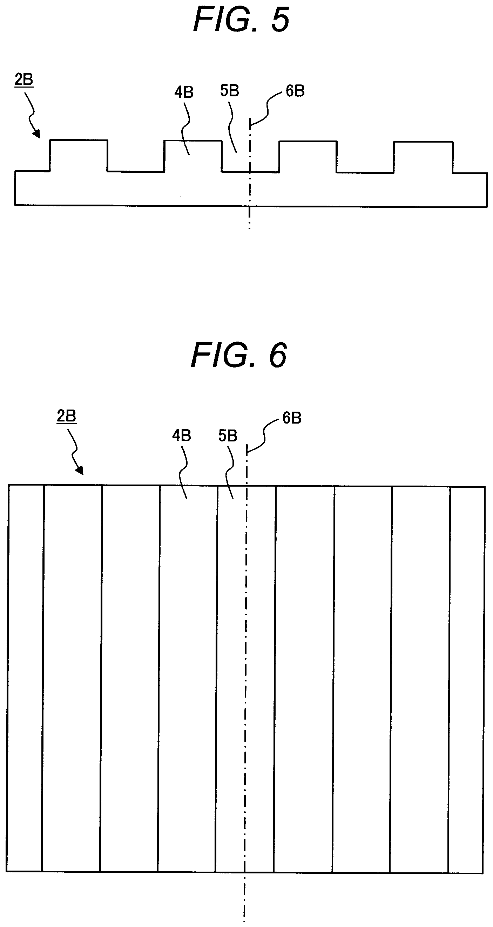

Figure 5 is a schematic view which shows the concave-convex structure of the surface of the pad 2B shown in Figure 2. Figure 6 is a schematic view as seen from the direction perpendicular to the surface shown in Figure 5.

Like the pad 2A, a plurality of pressing parts 4B are formed on the surface of the pad 2B which contacts the planar section of the rotating braked body 1 shown in Figure 1. A plurality of recessed parts 5B which do not contact the planar section of the rotating braked body 1 are formed between pressing parts 4B. Here, again the pad 2B is symmetric with respect to a centerline 6B of the width dimension of the pad 2B in the radial direction of the rotating braked body 1 shown in Figure 1. However, only four pressing parts 4B are formed and the widthwise center of one recessed part 5B located between two adjacent pressing parts 4B is located on the centerline 6B. Preferably each pressing part 4B has a prescribed length which extends almost parallel to a tangential direction of the planar section of the rotating braked body 1 shown in Figure 1, like the pressing part 4A.

As can be known from the explanation of Figures 3 to 6, the pressing part area against the rotating braked body 1 in each pad 2A is the sum of the areas of the five pressing parts 4A. On the other hand, the pressing part area against the rotating braked body 1 in each pad 2B is the sum of the areas of the four pressing parts 4B. Both are equal in both the rotational direction and radial direction of the rotating braked body 1.

The above two calipers 3A and 3B are structurally identical to each other and located in positions which are equal in distance from the rotation center or outer circumference of the rotating braked body 1. Although the pads 2A and 2B are different in the surface concave-convex structure, they have the same external dimensions. Therefore, when the rotating braked body 1 rotates around its rotary shaft, the centerline 6A shown in Figure 3 and the centerline 6B shown in Figure 5 coincide.

However, the position on the circumference of the rotating braked body 1 which is pressed by the pressing part 4A located on the centerline 6A of the pad 2A in one caliper 3A corresponds to the recessed part 5B located on the centerline 6B of the pad 2B in the other caliper 3B. Similarly, the positions on the circumference of the rotating braked body 1 which are pressed by the other pressing parts 4A of the pad 2A in the one caliper 3A correspond to the other recessed parts 5B of the pad 2B in the other caliper 3B.

As can be known from the above explanation, the positions on the circumference of the rotating braked body 1 where the temperature rises as they are pressed by the pressing parts 4A of the pad 2A in the one caliper 3A are not pressed by the pressing parts 4B of the pad 2B in the other caliper 3B. Therefore, it no longer occurs that as in the past, the same positions on the circumference of the rotating braked body 1 are pressed every half rotation and their temperatures rise, so excessive accumulation of increased temperature is prevented. Also the maximum value of increased temperature can be suppressed. Furthermore, since the above effect can be achieved by using the calipers 3A and 3B which are structurally identical, the structure of the brake device is simplified and assembling work and adjustment can be done easily.

Furthermore, when forming the plural pressing parts 4A and 4B for both the pads 2A and 2B respectively, they are formed in a manner to be radially almost symmetric with respect to the centerlines 6A and 6B of the widths of the pads 2A and 2B in the radial direction of the rotating braked body 1 respectively. Without forming in this way, excessive accumulation of increased temperature can be prevented and the maximum value of increased temperature can be suppressed; however, by forming them in this way, generation of unbalanced braking forces in the radial direction perpendicular to the rotational direction of the rotating braked body 1 in both the calipers 3A and 3 can be suppressed and the calipers 3A and 3B can give a balanced braking force.

As a variation of this embodiment, the pressing parts 4A and 4B and recessed parts 5A and 5B may be structured to have a curvature so as to match the radius of rotation of the rotating braked body 1 (arc-like structure). This can make the temperature rise of the rotating braked body 1 more uniform. In other words, the temperature distribution of the rotating braked body 1 can be made uniform.

### Second Embodiment

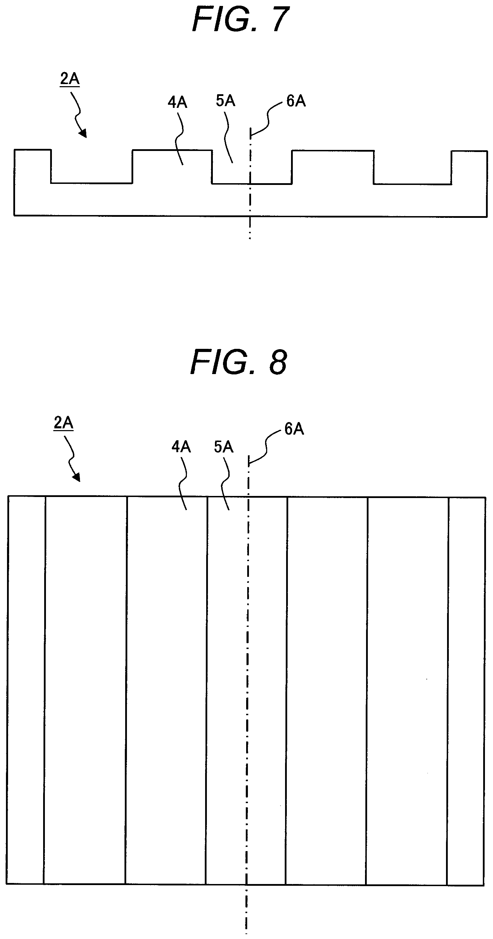

Figure 7 is a schematic view which shows the concave-convex structure of the pad 2A shown in Figure 2 according to another embodiment. Figure 8 is a schematic view as seen from the direction perpendicular to the surface shown in Figure 7.

A plurality of pressing parts 4A are formed on the surface of the pad 2A which contacts the planar section of the rotating braked body 1 shown in Figure 1. A plurality of recessed parts 5A which do not contact the planar section of the rotating braked body 1 are formed between pressing parts 4A. Also, the pad 2A is symmetric with respect to a centerline 6A of the width dimension of the pad 2A in the radial direction of the rotating braked body 1 shown in Figure 1. The embodiment is the same as the first embodiment in these points. However, in this embodiment, only four pressing parts 4A are formed and the widthwise center of one recessed part 5A located between two adjacent pressing parts 4A in the center area is located on the centerline 6A.

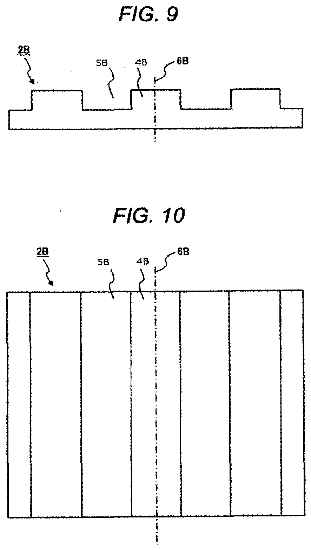

Figure 9 is a schematic view which shows the concave-convex structure of the surface of the pad 2B in Figure 2 according to the other embodiment. Figure 10 is a schematic view as seen from the direction perpendicular to the surface shown in Figure 9.

Like the pad 2A, a plurality of pressing parts 4B are formed on the surface of the pad 2B which contacts the planar section of the rotating braked body 1 shown in Figure 1. A plurality of recessed parts 5B which do not contact the planar section of the rotating braked body 1 are formed between pressing parts 4B. Here, again the pad 2B is symmetric with respect to the centerline 6B of the width dimension of the pad 2B in the radial direction of the rotating braked body 1 shown in Figure 1. The embodiment is the same as the first embodiment in these points. However, in this embodiment, only three pressing parts 4B are formed and the widthwise center of one pressing part 4B located in the center is located on the centerline 6B.

As can be known from the explanation of Figures 7 to 10, the pressing part area against the rotating braked body 1 in each pad 2A is the sum of the areas of the four pressing parts 4A. On the other hand, the pressing part area against the rotating braked body 1 in each pad 2B is the sum of the areas of the three pressing parts 4B. Both are equal in both the rotational direction and radial direction of the rotating braked body 1.

As in the first embodiment, when the rotating braked body 1 rotates around its rotary shaft, the centerline 6A shown in Figure 7 and the centerline 6B shown in Figure 9 coincide. However, the positions on the circumference of the rotating braked body 1 which are pressed by the pressing parts 4A of the pad 2A in one caliper 3A correspond to the recessed parts 5B of the pad 2B in the other caliper 3B.

Therefore, as in the first embodiment, the positions on the circumference of the rotating braked body 1 where the temperature rises as they are pressed by the pressing parts 4A of the pad 2A in the one caliper 3A are not pressed by the pressing parts 4B of the pad 2B in the other caliper 3B. Therefore, it no longer occurs that as in the past, the same positions on the circumference of the rotating braked body 1 are pressed every half rotation and their temperatures rise, so excessive accumulation of increased temperature is prevented. Also the maximum value of increased temperature can be suppressed. Furthermore, since the above effect can be achieved by using the calipers 3A and 3B which are structurally identical, the structure of the brake device is simplified and assembling work and adjustment can be done easily.

Three or more calipers may be installed. If that is the case, it is preferable that the pressing parts of the pad of each caliper be formed in a manner not to contact the same positions of the rotating braked body.

Next, an elevator system will be described referring to drawings.

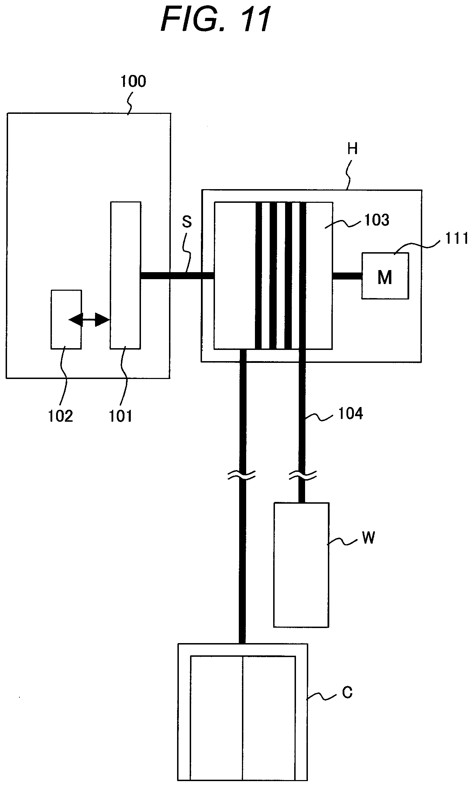

Figure 11 is a schematic block diagram which shows an elevator system according to an embodiment of the present invention.

In the figure, the elevator system includes a hoisting machine H, a cage C, a counter-weight W, and an elevator braking device 100 (brake device).

The hoisting machine H incorporates a motor 111 and a sheave 103 driven by the motor 111 and drives a rope 104 connected to the cage C and the counter-weight W.

The elevator braking device 100 has a brake disk 101 attached to a rotary shaft S of the hoisting machine H and a brake unit 102.

The brake disk 101 is coaxially fixed to the sheave 103 and rotates synchronously with the sheave 103.

The brake unit 102 has an actuator including an electromagnetic coil and a spring which are not shown in the figure, and in an unexcited state, a brake shoe (caliper) is pressed against the brake disk 101 by the elastic force of the spring to generate a braking force in the brake disk 101.

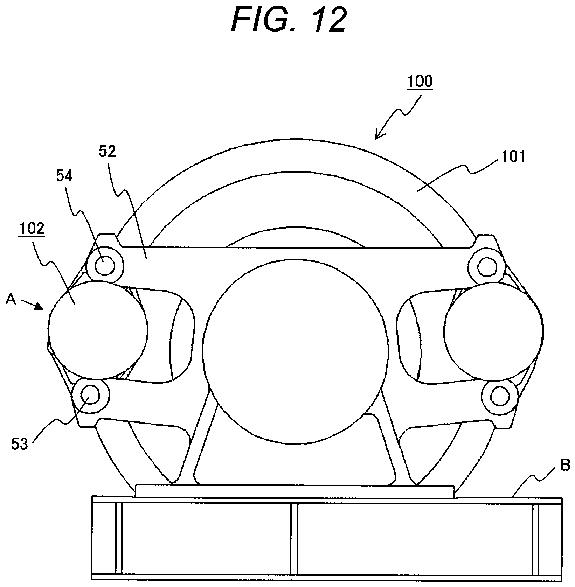

Figure 12 is a side view which shows details of an elevator braking device 100 shown in Figure 11.

In Figure 12, the elevator braking device 100 has a structure in which the brake disk 101 and the brake unit 102 are installed on a brake unit support 52 held by a base B.

The brake unit 102 is attached to the brake unit support 52 with a lower pin 53 and an upper pin 54. Here, the brake unit 102 is cylindrical in external form, but it is preferable that the lining (pad) be rectangular as shown in Figures 1 and 4 and so on.

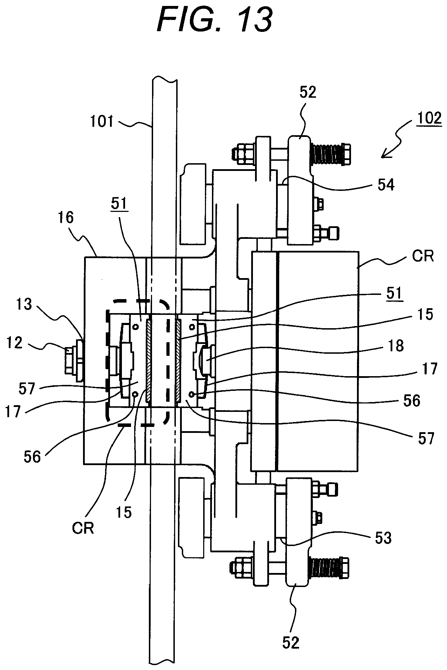

Figure 13 is a view taken in the direction of arrow A in Figure 12.

In Figure 13, a pair of brake shoes 51 (calipers) each having a lining 15 (pad) at the tip are provided, facing each other with the brake disk 101 between them.

Reference sign 12 is a stroke adjusting bolt which is screwed into a brake body 16 and functions as a connecting member for connecting the brake shoes 51 and the brake unit 102. The stroke adjusting bolt 12 adjusts the working distance of the brake shoes 51 for braking. Reference sign 13 is a lock nut which fixes the stroke adjusting bolt 12. Reference sign CR is a brake core which has an actuator including an electromagnetic coil and a spring which are not shown in the figure.

For braking, the brake shoe 51 on the brake unit 102 side is pressed against the brake disk 101 through a connecting rod 18 by a spring (not shown) incorporated in the brake core CR. As a consequence, the pair of brake shoes 51 on both sides of the brake disk 101 presses the brake disk 101 through the linings 15 and gives a braking force to the sheave 103 of the hoisting machine H shown in Figure 11. Reference sign 56 is a brake pin, reference sign 57 is a plate, and reference sign 17 is a fitting member composed of an elastic body such as a plate spring.

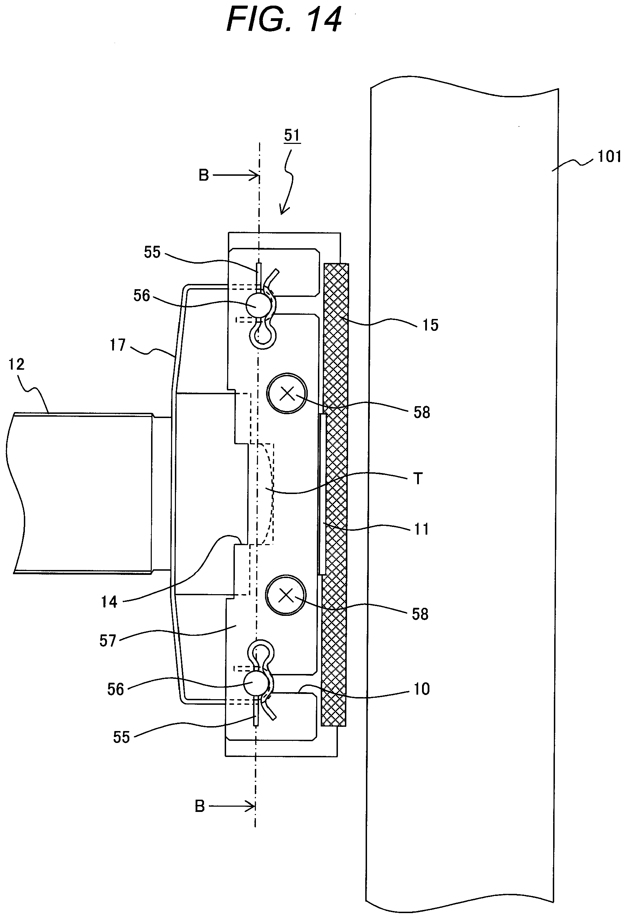

Figure 14 is an enlarged side view which shows the brake core CR including a brake shoe 51 shown in Figure 13.

Figure 14 shows a case that the electromagnetic coil (not shown) is energized and the pair of brake shoes 51 is in a retracted state (non-contact state) with respect to the brake disk 101. The brake body 16 is omitted and the essential portion of the brake shoe 51 is schematically shown.

The tip of the stroke adjusting bolt 12 is engaged with an engaging groove 14 of the brake shoe 51 through a protrusion T which is rotatably joined to the groove. The stroke adjusting bolt 12 is provided with the fitting member 17 and by engaging the bend portion of the tip of the fitting member 17 with the brake pin 56, the brake shoe 51 is rotatably attached to the stroke adjusting bolt 12.

Reference sign 55 is a retaining split pin which holds the brake pin 56 on the brake shoe 51. The plate 57, which has a notch 10 to be engaged with the brake pin 56, is fixed to a side face of the brake shoe 51 by fastening screws 58. Reference sign 11 is an L-shaped operation section provided on the plate 57. Reference sign 15 is a lining (pad).

The present invention is not limited to the above embodiments but includes various variations. For example, the above embodiments have been described in detail for easy understanding of the present invention and all the constituent elements described above need not be always provided.

### List of Reference Signs

1: rotating braked body,
2A, 2B: pad,
3A, 3B: caliper,
4A, 4B: pressing part,
5A, 5B: recessed part,
6A, 6B: centerline,
10: notch,
11: operation section,
12: stroke adjusting bolt,
13: lock nut,
14: engaging groove,
15: lining,
16: brake body,
17: fitting member,
18: connecting rod,
51: brake shoe,
52: brake unit support,
53: lower pin,
54: upper pin,
55: split pin,
56: brake pin,
57: plate,
58: fastening screw,
59: stepped portion,
100: elevator braking device,
101: brake disk,
102: brake unit,
103: sheave,
104: rope,
111: motor,
B: base,
C: cage,
CR: brake core,
H: hoisting machine,
S: rotary shaft,
T: protrusion,
W: counter-weight

## Claims

1. A brake device having a function to adjust a speed of a hoisting machine (H), or stop the hoisting machine (H) as a constituent element of an elevator system,
the brake device comprising:
a rotating braked body (1) having a rotary shaft (S) interlocked with a rotation of the hoisting machine (H);
a plurality of pads (2A, 2B) which are disposed on a surface of the rotating braked body (1) in an attachable and detachable manner and have a function to give a braking force to the rotating braked body (1); and
a plurality of calipers (3A, 3B) holding the pads (2A, 2B),
wherein the plural calipers (3A, 3B) are structurally identical to each other,
the pads (2A, 2B) have a pressing part (4A, 4B) which contacts the surface of the rotating braked body (1) and a recessed part (5A, 5B) which does not to contact the surface of the rotating braked body (1), and
a position on the rotating braked body (1) which contacts the pressing part of the pad (2A, 2B) in one of the calipers (3A, 3B) is different from a position on the rotating braked body (1) which contacts the pressing part of the pad (2A, 2B) in another caliper (3A, 3B),
**characterized in that**
when the rotating braked body (1) rotates around its rotary shaft (S) a first position on the circumference of the rotating braked body (1) where temperature rises as the first position is pressed by the pressing part (4A) of a first pad (2A) in a first caliper (3A) differs from a second position on the circumference of the rotating braked body (1) where temperature rises as the second position is pressed by the pressing part (4B) of a second pad (2B) in a second caliper (3B), and
the first position on the circumference of the rotating braked body (1) corresponds to the recessed part (5B) of the second pad (2B) and is not pressed by the pressing part (4B) of the second pad (2B) and the second position on the circumference of the rotating braked body corresponds to the recessed part (5A) of the first pad (2A) and is not pressed by the pressing part (4A) of the first pad (2A), as the first and second pads (2A, 2B) are pressed against the rotating braked body (1), when the rotating braked body (1) rotates around its rotary shaft (S).

2. The brake device according to Claim 1,
wherein the rotating braked body (1) is discoidal, and
at least a portion of the recessed part is arranged in a tangential direction of the rotating braked body (1).

3. The brake device according to Claim 1 or 2,
wherein the pad (2A, 2B) is symmetric with respect to a centerline of a width dimension of the pad (2A, 2B) in a radial direction of the rotating braked body (1).

4. The brake device according to Claim 1 or 2,
wherein the calipers (3A, 3B) are two calipers.

5. The brake device according to Claim 4,
wherein the two calipers (3A, 3B) are arranged symmetrically with respect to a centerline of the surface of the rotating braked body (1).

6. An elevator system comprising:
a hoisting machine (H);
a cage (C); and
a brake device according to any of the claims 1 to 3.

## Patentansprüche

1. Bremsvorrichtung, die eine Funktion aufweist, eine Drehzahl einer Hebemaschine (H) einzustellen oder die Hebemaschine (H) anzuhalten, als ein Grundelement eines Aufzugsystems,
wobei die Bremsvorrichtung Folgendes umfasst:
einen gebremsten Drehkörper (1), der eine Drehwelle (S) aufweist, die mit einer Drehung der Hebemaschine (H) verzahnt ist,
mehrere Beläge (2A, 2B), die auf einer Oberfläche des gebremsten Drehkörpers (1) auf eine anbringbare und abnehmbare Weise vorgesehen sind und eine Funktion aufweisen, eine Bremskraft auf den gebremsten Drehkörper (1) auszuüben, und
mehrere Bremssättel (3A, 3B), die die Beläge (2A, 2B) halten,
wobei die mehreren Bremssättel (3A, 3B) strukturell miteinander identisch sind,
die Beläge (2A, 2B) einen drückenden Teil (4A, 4B), der die Oberfläche des gebremsten Drehkörpers (1) berührt, und einen vertieften Teil (5A, 5B), der die Oberfläche des gebremsten Drehkörpers (1) nicht berührt, aufweisen und
eine Position auf dem gebremsten Drehkörper (1), der den drückenden Teil des Belags (2A, 2B) in einem der Bremssättel (3A, 3B) berührt, von einer Position auf dem gebremsten Drehkörper (1), die den drückenden Teil des Belags (2A, 2B) in einem weiteren Bremssattel (3A, 3B) berührt, verschieden ist,
**dadurch gekennzeichnet, dass**
dann, wenn sich der gebremste Drehkörper (1) um seine Drehwelle (S) dreht, eine erste Position auf dem Umfang des gebremsten Drehkörpers (1), an der die Temperatur steigt, während die erste Position durch den drückenden Teil (4A) eines ersten Belags (2A) in einem ersten Bremssattel (3A) gedrückt wird, von einer zweiten Position auf dem Umfang des gebremsten Drehkörpers (1), an dem die Temperatur steigt, während die zweite Position durch den drückenden Teil (4B) eines zweiten Belags (2B) in einem zweiten Bremssattel (3B) gedrückt wird, verschieden ist und
die erste Position auf dem Umfang des gebremsten Drehkörpers (1) dem vertieften Teil (5B) des zweiten Belags (2B) entspricht und nicht durch den drückenden Teil (4B) des zweiten Belags (2B) gedrückt wird und die zweite Position auf dem Umfang des gebremsten Drehkörpers dem vertieften Teil (5A) des ersten Belags (2A) entspricht und nicht durch den drückenden Teil (4A) des ersten Belags (2A) gedrückt wird,
während der erste und der zweite Belag (2A, 2B) gegen den gebremsten Drehkörper (1) gedrückt werden, wenn sich der gebremste Drehkörper (1) um seine Drehwelle (S) dreht.

2. Bremsvorrichtung nach Anspruch 1,
wobei der gebremste Drehkörper (1) scheibenförmig ist und
mindestens ein Abschnitt des vertieften Teils in einer tangentialen Richtung des gebremsten Drehkörpers (1) angeordnet ist.

3. Bremsvorrichtung nach Anspruch 1 oder 2,
wobei der Belag (2A, 2B) symmetrisch in Bezug auf eine Mittellinie einer Breitenabmessung des Belags (2A, 2B) in einer radialen Richtung des gebremsten Drehkörpers (1) ist.

4. Bremsvorrichtung nach Anspruch 1 oder 2,
wobei die Bremssättel (3A, 3B) zwei Bremssättel sind.

5. Bremsvorrichtung nach Anspruch 4,
wobei die beiden Bremssättel (3A, 3B) symmetrisch in Bezug auf eine Mittellinie der Oberfläche des gebremsten Drehkörpers (1) angeordnet sind.

6. Aufzugsystem, das Folgendes umfasst:
eine Hebemaschine (H);
einen Fahrkorb (C) und
eine Bremsvorrichtung nach einem der Ansprüche 1 bis 3.

## Revendications

1. Dispositif de freinage dont la fonction est d'ajuster une vitesse d'une machine de levage (H), ou d'arrêter la machine de levage (H) en tant qu'élément constitutif d'un système élévateur,
le dispositif de freinage comprenant :
un corps freiné en rotation (1) ayant un arbre de rotation (S) interverrouillé avec une rotation de la machine de levage (H) ;
une pluralité de patins (2A, 2B) qui sont disposés sur une surface du corps freiné en rotation (1) d'une manière attachable et détachable et dont la fonction est d'appliquer une force de freinage au corps freiné en rotation (1) ; et
une pluralité d'étriers (3A, 3B) maintenant les patins (2A, 2B),
dans lequel la pluralité d'étriers (3A, 3B) sont structurellement identiques les uns aux autres,
les patins (2A, 2B) ont une partie de pression (4A, 4B) qui vient en contact avec la surface du corps freiné en rotation (1) et une partie évidée (5A, 5B) qui ne vient pas en contact avec la surface du corps freiné en rotation (1), et une position sur le corps freiné en rotation (1) qui vient en contact avec la partie de pression du patin (2A, 2B) dans un des étriers (3A, 3B) est différente d'une position sur le corps freiné en rotation (1) qui vient en contact avec la partie de pression du patin (2A, 2B) dans un autre étrier (3A, 3B),
**caractérisé en ce que**
quand le corps freiné en rotation (1) est en rotation autour de son arbre de rotation (S), une première position sur la circonférence du corps freiné en rotation (1) où une température augmente lorsque la première position est pressée par la partie de pression (4A) d'un premier patin (2A) dans un premier étrier (3A), diffère d'une seconde position sur la circonférence du corps freiné en rotation (1) où une température augmente lorsque la seconde position est pressée par la partie de pression (4B) d'un second patin (2B) dans un second étrier (3B), et
la première position sur la circonférence du corps freiné en rotation (1) correspond à la partie évidée (5B) du second patin (2B) et n'est pas pressée par la partie de pression (4B) du second patin (2B), et la seconde position sur la circonférence du corps freiné en rotation correspond à la partie évidée (5A) du premier patin (2A) et n'est pas pressée par la partie de pression (4A) du premier patin (2A) lorsque le premier et le second patin (2A, 2B) sont pressés contre le corps freiné en rotation (1), quand le corps freiné en rotation (1) est en rotation autour de son arbre de rotation (S).

2. Dispositif de freinage selon la revendication 1,
dans lequel le corps freiné en rotation (1) est en forme de disque, et
au moins une portion de la partie évidée est agencée dans une direction tangentielle du corps freiné en rotation (1).

3. Dispositif de freinage selon la revendication 1 ou 2,
dans lequel le patin (2A, 2B) est symétrique par rapport à une ligne centrale d'une dimension en largeur du patin (2A, 2B) dans une direction radiale du corps freiné en rotation (1).

4. Dispositif de freinage selon la revendication 1 ou 2,
dans lequel les étriers (3A, 3B) sont deux étriers.

5. Dispositif de freinage selon la revendication 4,
dans lequel les deux étriers (3A, 3B) sont agencés symétriquement par rapport à une ligne centrale de la surface du corps freiné en rotation (1).

6. Système élévateur comprenant :
une machine de levage (H) ;
une cage (C) ; et
un dispositif de freinage selon l'une quelconque des revendications 1 à 3.
